# EUROPEAN PATENT APPLICATION

(11) **EP 2 236 444 A1**
(43) Date of publication of application: **06.10.2010**
(21) Application number: 08863862.2
(22) Date of filing: 02.12.2008
(51) Int. Cl.: B65G 61/00, G06Q 50/00

(54) **TRANSPORTAION PLANNING SYSTEM AND METHOD FOR THE SAME**

(30) Priority: 25.12.2007 JP 2007332160
(71) Applicant: Hitachi, Ltd., Tokyo 100-8280 (JP)
(72) Inventor: FUNAKI, Kenichi, Chiyoda-ku, Tokyo 100-8220 (JP); SAIGUSA, Yoshinori, Chiyoda-ku, Tokyo 100-8220 (JP); WAKI, Tetsuo, Chiyoda-ku, Tokyo 100-8220 (JP)
(74) Representative: Strehl Schübel-Hopf & Partner
(86) International application number: PCT/JP2008/003565
(87) International publication number: WO 2009/081525

(57) **Abstract**

A transportation planning system comprises a first transportation mode and a second transportation mode having a longer transportation time than the first transportation mode. The transportation planning system determines a first transportation amount transported by the first transportation mode and, after the first transportation amount has been determined, determines a second transportation amount transported by the second transportation mode, wherein: the first transportation amount is an amount obtained by subtracting, from a demand amount prediction value at a future time point when the transportation time from a supply source to a supply destination by the first transportation mode elapses, a stock plan amount at the future time point and an amount of goods arriving at the supply destination by the second transportation mode; and the second transportation amount is a base demand amount that is part of a demand amount prediction value at a future time point when the transport time by the second transportation mode elapses.

## Description

### Field of the invention

The present invention relates to a technology for planning transportation of goods from a supply source to a supply destination, which allows the use of transportation modes each with a different transportation time. Background

Accompanied with globalization with respect to manufacturing and sales locations, the time required for transporting goods between locations has been becoming longer. Especially when supplying products and components to the point of demand, the item and number of the goods to be supplied have to be determined based on estimation with respect to the future demand corresponding to the transportation time. The longer the transportation time is increased, the more difficult the accurate determination becomes, and accordingly, the stock is built up. The high-speed transportation mode such as air freight has been introduced to reduce the transportation time. Generally, however, the cost for the air freight is higher than the sea freight. Therefore the use of the air freight for all the cases is not rational, and the transportation mode is selected depending on the size of the goods to be transported, unit value of the transportation cost, and the adequate transportation time in view of life cycle of the product for respective items. For example, in most of the cases, air freight is used for transporting the electronic device such as the semiconductor component and HDD (Hard Disk Drive) with a short life-cycle and relatively small size. Meanwhile, sea freight is generally used for transporting large-sized goods such as white stuff and elevators.

When using the sea freight, if the additional urgent transportation is required in response to the increased demand just before the transportation resulting from substantially unstable change in the demand of the supply destination, air freight is likely to be used. The use of the air freight in an emergency generally makes the transportation cost higher than the case on the reservation basis. Excessively frequent use of urgent transportation results in the cost increase.

As described above, selection of the transportation mode, and determination of the proportion of the use of the high-speed transportation mode to the low-speed transportation mode may be essential tasks to be achieved. For this, the technology for supporting selection of adequate transportation mode in view of the time and cost for each transportation case has been proposed. For example, Patent Documents 1, 2 and 3 introduce the system which allows efficient selection of the efficient one from transportation modes presented by plural carriers.

Patent Document 1: JP-A No. 2002-163337
Patent Document 2: JP-A No. 2002-312441
Patent Document 3: JP-A No. 2005-352992

### Disclosure of the Invention

### Problem to be Solved by the Invention

The demand to reduce the logistics cost for transporting not only the large-sized goods via sea freight but also the electronic device generally transported via air freight has been increased owing to severe price competition. The use of the sea freight may be the reasonable solution to reduce the cost. Additionally, the sea fright may be efficiently used for improving fuel consumption rate and reducing CO₂ emission.

In view of the aforementioned situation, the technology as disclosed in Patent Documents 1, 2 and 3 allows the user to select the transportation mode from the supply source to the supply destination in each case, but fails to allow the user to determine the plan for using both the high-speed and low-speed transportation modes over a prospective period. In order to determine the plan for using plural transportation modes, each transportation amount established by the respective transportation modes has to be appropriately determined in consideration of not only the cost and time for transportation but also the capacity to comply with the demand of the supply destination and the in-transportation stock.

The present invention provides a transportation planning system and a method for the same for efficiently using both high-speed and low-speed transportation modes in the planning of the transportation from a supply source to a supply destination based on the future demand information from the supply destination.

The present invention also provides a transportation planning system and a method for the same for efficiently using both high-speed and low-speed transportation modes in consideration of the transportation cost and the in-transportation stock.

### Means for Solving the Problem

A transportation planning system and a method for the same are structured as described below.

A storage device is provided for storing a demand amount prediction value and a stock plan amount of goods in a supply destination, and a transportation time of the goods from a supply source to the supply destination in accordance with each of plural transportation modes with different transportation times. One of the plural transportation modes is set to a first transportation mode, and another is set to a second transportation mode with a transportation time longer than that of the first transportation mode. A first transportation amount via the first transportation unit is determined by subtracting the stock plan amount at a first future time point and an amount of the goods which arrives at the supply destination via the second transportation mode from the demand amount prediction value at the first future time point after an elapse of the time for transporting the goods via the first transportation mode from a present time from the supply source to the supply destination. A base demand amount corresponding to a part of the demand amount prediction value at a second future time point after an elapse of the transportation time via the second transportation mode from the present time subsequent to the determination of the first transportation amount made by the first transportation amount determination unit is determined as a second transportation amount via the second transportation mode.

The invention also provides the transportation planning system and the method for the same for determining a proportion of the base demand amount to the demand amount prediction value based on the stock cost, transportation cost, and sales opportunity loss in reference to the in-transportation stock amounts via the first and the second transportation modes and the stock amount of the supply destination.

### Advantage of the Invention

The present invention provides the transportation planning system and the method for the same for efficiently using the high-speed (short transportation time) and the low-speed (long transportation time) transportation modes when planning transportation of goods from the supply source to the supply destination based on the future demand information from the supply destination.

The present invention also provides the transportation planning system and the method for the same for efficiently using the high-speed and the low-speed transportation modes in consideration of the transportation cost and the in-transportation stock amount. Best Mode for Carrying out the Invention

An embodiment of the transportation planning system according to the present invention will be described.

The transportation planning system of the embodiment makes the transportation plan by selectively employing the transportation mode which requires long transportation time at low transportation unit cost such as sea freight, and the transportation mode which requires short transportation time at high transportation unit cost such as air freight for transporting goods corresponding to the demand amount of the supply destination from the supply source to the supply destination. In the planning of transportation, the demand amount prediction value of the supply destination for each week and the possible number of shipments of the supply source for each week are given. It is then assumed that each transportation amount of the sea freight and the air freight, which are available as the transportation modes, is determined for each week.

In the embodiment, two transportation types, that is, sea freight and air freight are employed as the transportation modes for clarifying the explanation. However, transportation by rail, by road and combination thereof may also be used as the transportation mode.
Three or more transportation types may also be used. The suitable term as an alternative to the transportation mode which is generally used for indicating the sea freight and the air freight has not been found. Therefore, it will be used in description of the embodiment.

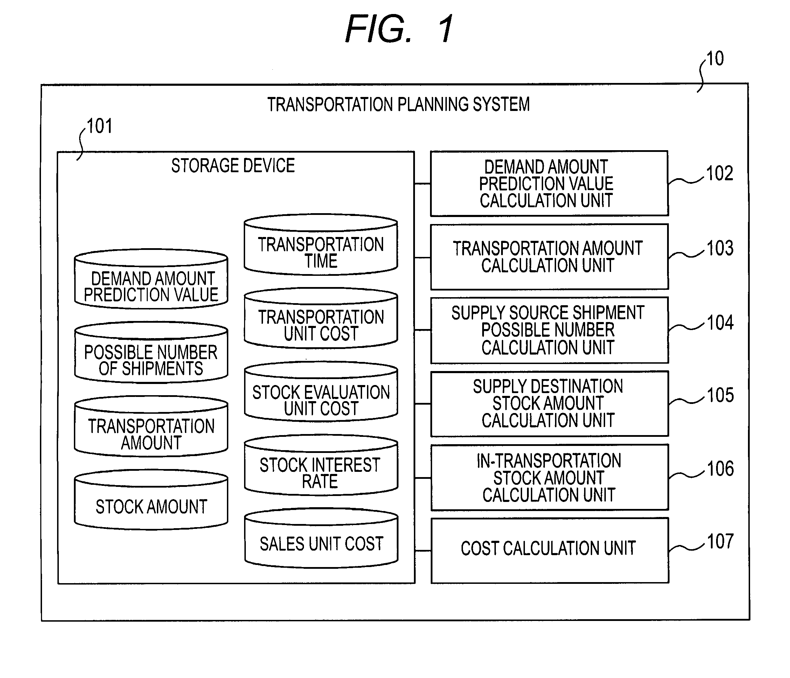

Fig. 1 illustrates an example of a structure of a transportation planning system. The transportation planning system (hereinafter referred to as a present system) 10 is provided with a storage device 101 for storing master information with respect to transportation time and transportation unit cost from the supply source to the supply destination in accordance with the transportation mode, the stock evaluation unit cost, the stock interest rate, and the sales unit cost in accordance with goods to be transported, and values such as the demand amount prediction value at each time point of the supply destination which are calculated and updated by the present system as needed, the possible number of shipments, the transportation amount and the stock amount at each time point of the supply source, a demand amount prediction value calculation unit 102 for calculating a demand amount prediction value at each future time point of the supply source, a transportation amount calculation unit 103 for calculating the transportation amount and the time point of shipment from the supply source, and the transportation amount and the incoming time point to the supply destination, a supply source shipment possible number calculation unit 104 for calculating the possible number of shipments from the supply source, a supply destination stock amount calculation unit 105 for calculating the stock amount at each time point of the supply destination, an in-transportation stock amount calculation unit 106 for calculating the in-transportation stock amount, and a cost calculation unit 107 for calculating the transportation cost, the stock cost, and the sales opportunity loss. The system may also be provided with a display device (not shown) for displaying the interim result of the process and data to be used on the display screen to allow the user to make a decision.

In the embodiment, the terms "amount" and "number" are mixed corresponding to the use of the general term such as "possible number of shipments" and "transportation amount". In order to indicate the number of the components and devices (countable), the "amount" may be regarded as "number". Meanwhile, in order to indicate volume and weight of the goods such as liquid (uncountable), the "number" may be regarded as "amount".

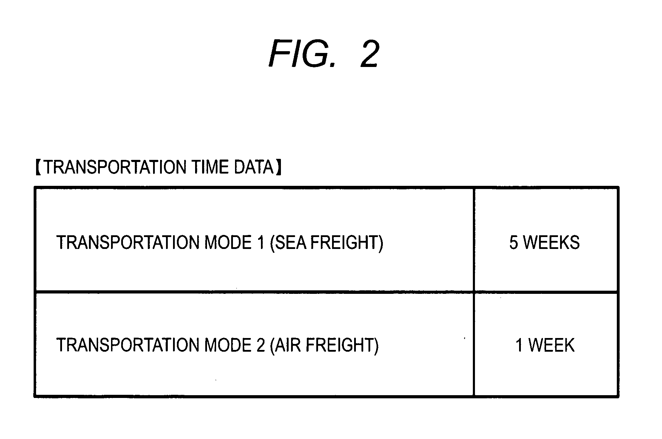

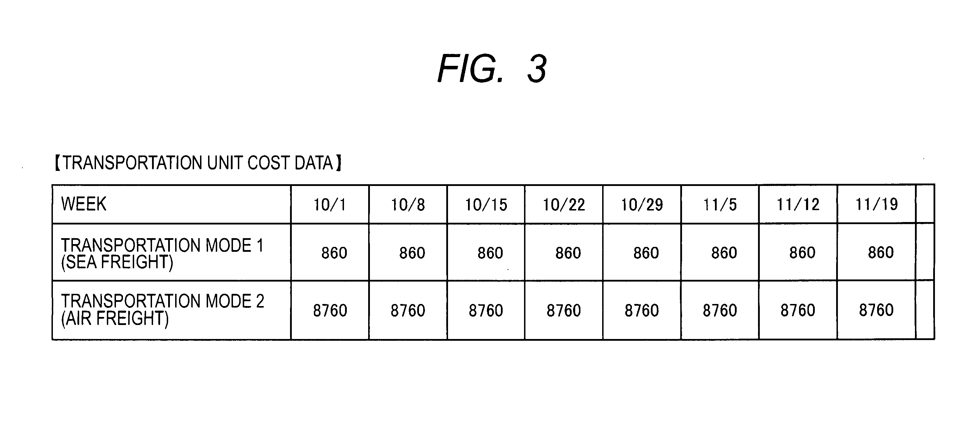

The data stored in the storage device 101, for example, the transportation time, transportation unit cost, stock evaluation unit cost, stock interest rate, sales unit cost, demand amount prediction value, possible number of shipments, transportation amount, and stock amount is held as illustrated in Figs. 2 to 10, respectively. Referring to Figs. 3 to 6, the respective data values of the transportation unit cost, stock evaluation unit cost, the stock interest rate, and sales unit cost are stored for each week. If there is no difference in those values depending on the time point, they may be stored as a single value irrespective of time point identification.
The respective data of the demand amount prediction value and the possible number of shipments as shown in Figs. 7 and 8 is updated through processing by the transportation planning system as needed. The method for classifying this data by the record for the respective updating time points so as to be stored may be considered. The transportation amount data shown in Fig. 9 represents the amount of goods to be transported, and the time point for transportation by storing the shipment amount from the supply source and incoming amount to the supply destination for each transportation mode. The stock amount data shown in Fig. 10 contains stock amounts of the supply destination, and the in-transportation stock amounts via both sea freight and air freight, separately. Alternatively, the sum total of those aforementioned amounts may be simply stored.

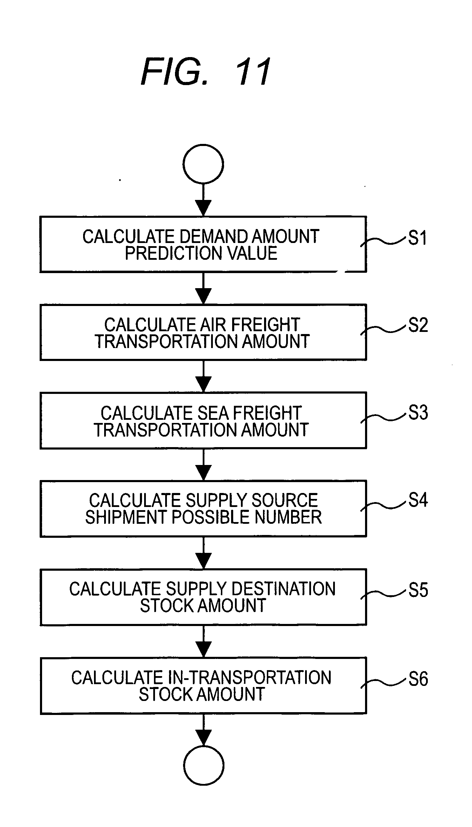

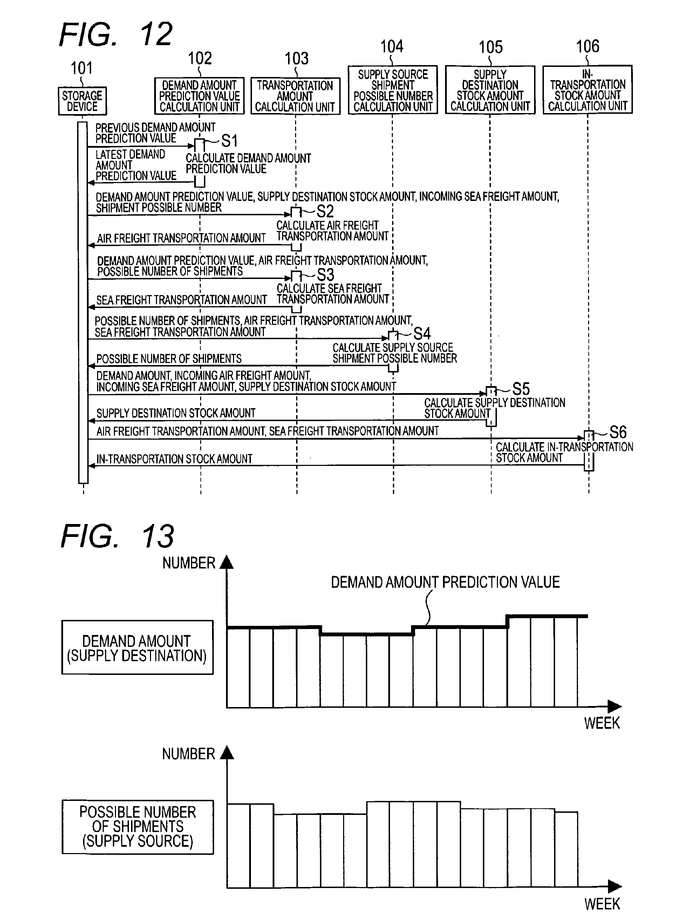

Each operation of components for forming the transportation planning system as illustrated in Fig. 1 will be described. Fig. 11 represents a process flow which allows the present system to determine the transportation amount for each week. Fig. 12 is a sequential chart of each sequence of the respective steps shown in Fig. 11 to be executed by the respective components of the present system, indicating the order of the process. Specific explanations with respect to the process steps will be described referring to the drawings.

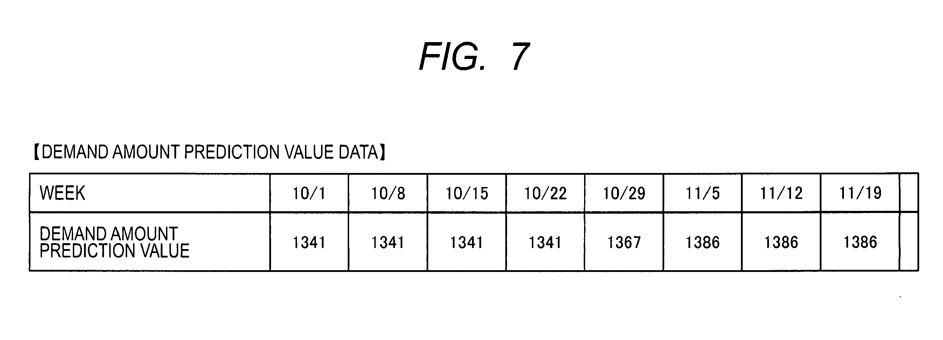

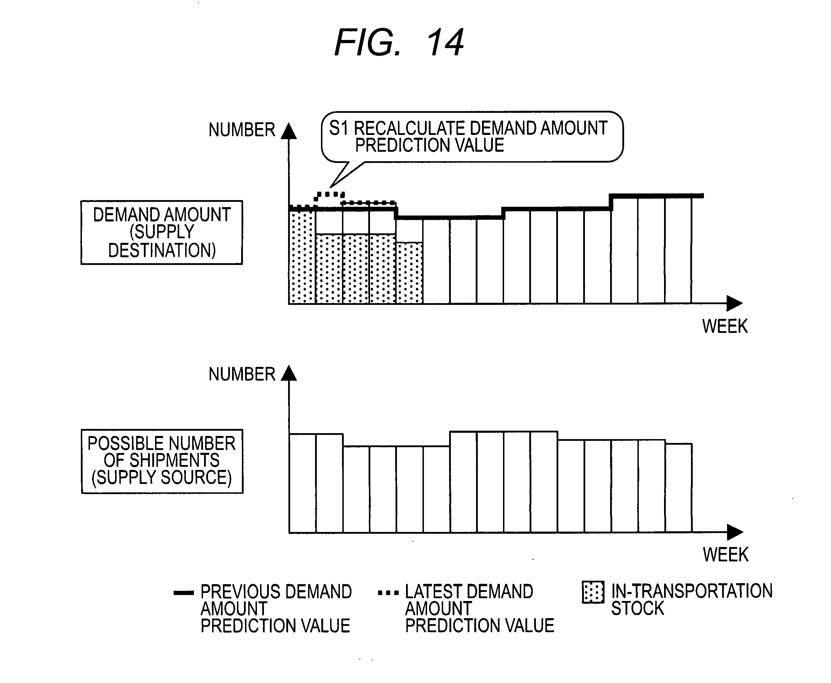

As illustrated in Fig. 13, it is assumed that the demand amount prediction value of the supply destination and the possible number of shipments of the supply source are given for each week in the initial state. The demand amount prediction value calculation unit 102 calculates a latest demand amount prediction value in step S1 in order to allow the present system to determine the shipment amount in the present week (Fig. 14). In the embodiment, the logic for calculating the demand amount prediction value in step S1 is not limited to the specific one. For example, the calculation logic unique to the specific case or the actual demand amount which has been obtained while carrying out the embodiment may be employed. When the demand amount prediction value is calculated in step S1, the demand amount prediction value data registered in the storage device 101 (Fig. 7) is updated, which will be referred to following steps.

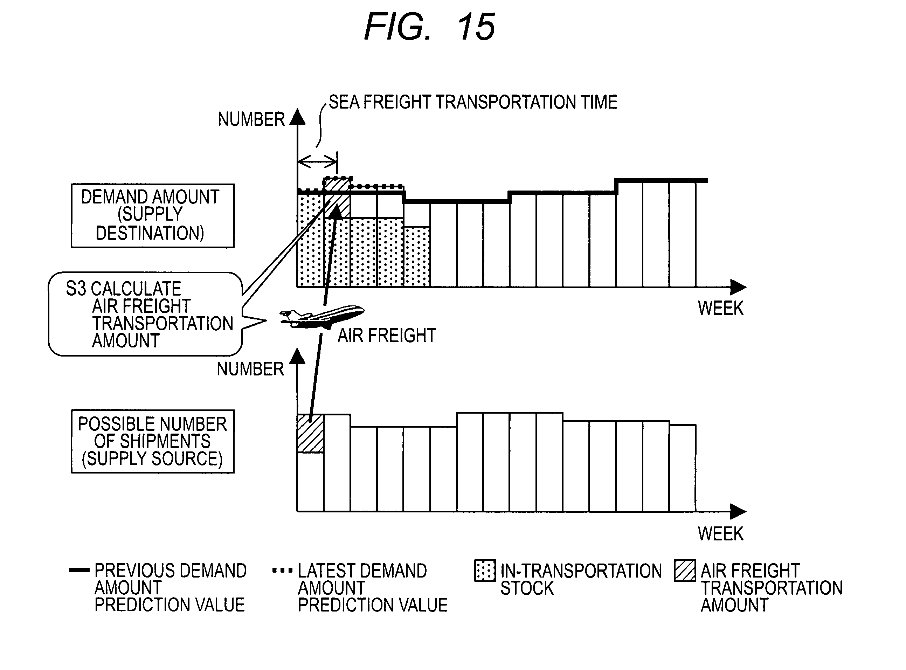

The transportation amount calculation unit 103 calculates an air freight amount from the supply source in the present week in step S2 (Fig. 15). In this step, the transportation amount calculation unit 103 subtracts the stock amount of the supply source (stock plan amount value) and the incoming amount via sea freight at the incoming time point from the demand amount prediction value at a future point (incoming time point) after an elapse of the transportation time from the present week (present time point), and sets the obtained value as the transportation amount via air freight so as to be stored in the storage device 101. If the obtained value is equal to or smaller than 0, the transportation via air freight is not required. If the obtained value exceeds the possible number of shipments of the supply source, the possible number of shipments will be determined as the transportation amount via air freight. Fig. 15 represents the correlation among the respective values when the transportation time via air freight is set to one week.

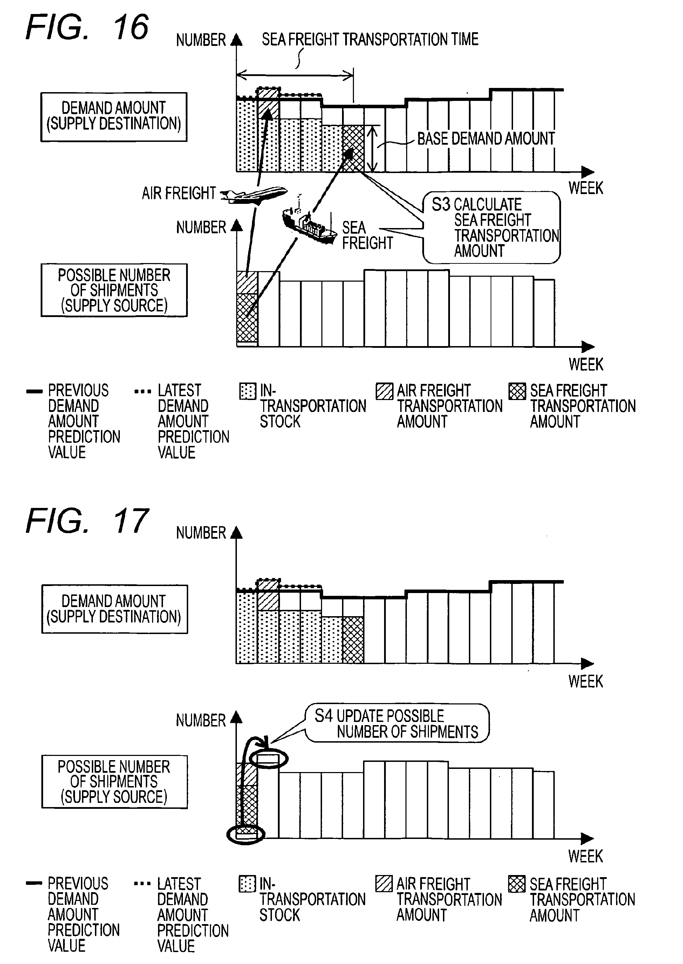

The transportation amount calculation unit 103 calculates the transportation amount via sea freight from the supply source in the present week in step S3 (Fig. 16). In this step, the transportation amount calculation unit 103 calculates a part of the demand amount prediction value at the future time point (incoming time point) after the elapse of the transportation time via sea freight from the present week as a base demand amount so as to be stored in the storage device 101 as the transportation amount via sea freight. In the embodiment, the method for obtaining the base demand amount is not limited to a specific one. For example, the amount may be obtained by multiplying the demand amount prediction value by a constant coefficient, or an absolute value of the base demand amount may be designated as needed. If the base demand amount is larger than the value obtained by subtracting the air freight transportation amount calculated in step S2 from the possible number of shipments of the supply source, the value obtained by subtracting the air freight amount from the possible number of shipments may be regarded as the sea freight amount. Fig. 16 represents the correlation among the respective values when the transportation time via sea freight is set to five weeks.

Execution of steps S2 and S3 as described above allows shipment from the supply source via air freight and sea freight in the present week, and determines the transportation amount. That is, the transportation amount calculation unit 103 is divided into two sections; one is a first transportation amount determination unit for obtaining the transportation amount of the transportation mode with short transportation time in step S2, and the other is a second transportation amount determination unit for obtaining the transportation amount of the transportation mode with long transportation time in step S3. The first transportation amount determination unit determines the transportation amount, and then the second transportation amount determination unit determines the transportation amount so as to make the transportation plan in accordance with the demand amount prediction value. Execution of the process in the inverted order may make the possible number of shipments small, which may fail to establish the demand amount prediction value.

The supply source shipment possible number calculation unit 104 updates the shipment possible number data in step S4. Specifically, if the value of shipment amounts via air freight and sea freight in the present week is smaller than the possible number of shipments in the present week, the difference therebetween is added to the possible number of shipments of the next week (at the time point for making the next transportation plan)(Fig. 17).

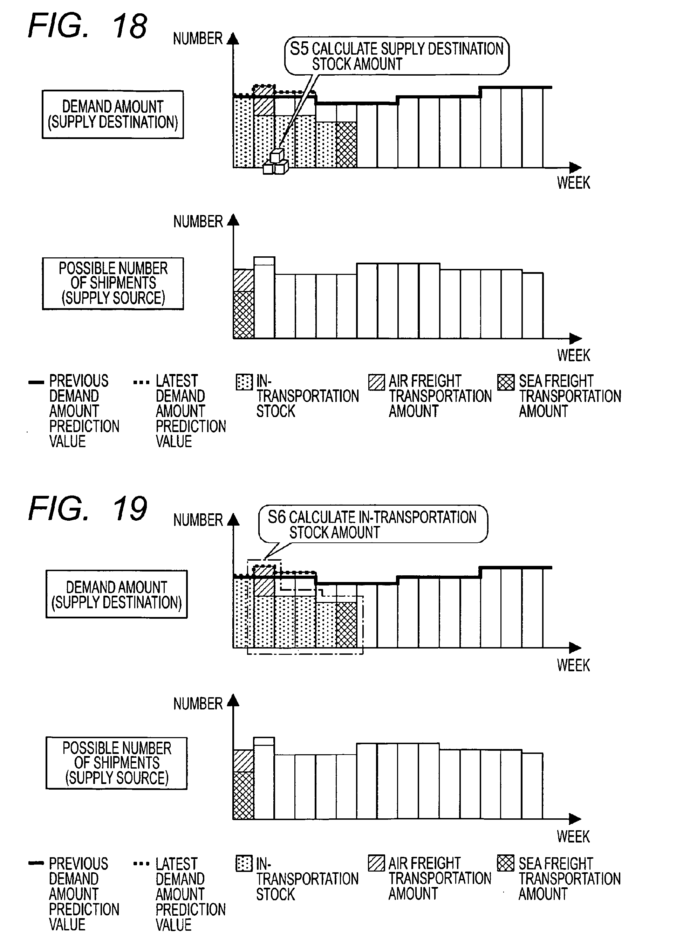

The supply destination stock amount calculation unit 105 calculates the stock amount (plan amount) of the supply destination in step S5 (Fig. 18). The stock amount (plan amount) at a time point of each weekend is calculated based on the latest demand amount prediction value of the supply destination and an incoming plan amount via air freight and sea freight. Specifically, the stock amount (plan amount) in the present weekend is calculated by subtracting the demand amount prediction value in the present week from the sum of the stock amount in the previous weekend and the incoming planned amount in the present week (air freight + sea freight). The obtained value is stored in the storage device 101. If the value is equal to or smaller than 0, it is designed to set the stock amount (planned amount) to 0.

The in-transportation stock amount calculation unit 106 sums the in-transportation amounts via air freight and sea freight at the time point of the present week. The obtained value is stored in the storage device 101 as the in-transportation stock amount (Fig. 19). In the embodiment, the air freight transportation time is set to one week, and the sea freight transportation time is set to five weeks. The in-transportation stock amount in a given week (at the time point of the weekend) is calculated as the sum of the transportation amount via air freight which arrives at the supply destination the week next to the present week, and the transportation amount via sea freight which arrives at the supply destination up to five weeks from the week next to the present week (the amount of the goods which arrives in the present week is added to the supply destination stock amount).

Execution of steps S1 to S6 makes the transportation plan of a given week (transportation amount of air/sea freights). A series of the processing executed as passage of each week allows the transportation plan to be sequentially made.

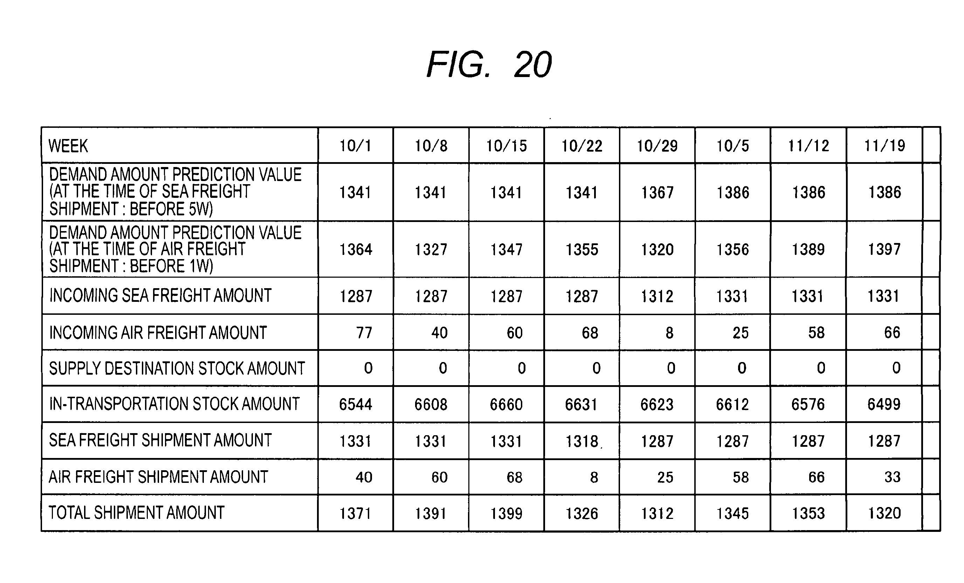

Fig. 20 shows an example of the sequentially made transportation plan. Fig. 20 represents the demand amount prediction values based on which the sea freight transportation amount for each week is calculated, and the demand amount prediction values based on which the air freight transportation amount for each week is calculated. In the example, the base demand amount for obtaining the sea freight transportation amount is calculated as 96% of the demand amount prediction value (at the time point of sea freight shipment). For example, the sea freight transportation amount which arrives at the supply destination in the week of 11/5, that is, the value 1331 is 96% of the demand amount prediction value of 1386. This value corresponds to the amount to be shipped from the supply source via sea freight in the week of 10/1 five weeks ago. The air freight transportation amount is obtained by subtracting the sea freight incoming amount from the demand amount prediction value. For example, the air freight transportation amount which arrives at the supply destination in the week of 10/8, that is, the value of 40 is obtained by subtracting the sea freight incoming amount of 1287 from the demand amount prediction value (at the time point of air freight shipment) 1327. This value corresponds to the air freight amount to be shipped from the supply source in the week of 10/1 one week ago. In this example, the supply destination has no stock kept. As for the in-transportation stock amount, at the time point of the weekend of 10/1, the sum of the transportation amount via the air freight which arrives at the supply destination in the week of 10/8, that is, the value of 40 and the transportation amount via sea freight which arrives from the week of 10/8 to that of 11/5, that is, the value of 6504, that is, 6544 in total is in the transportation.

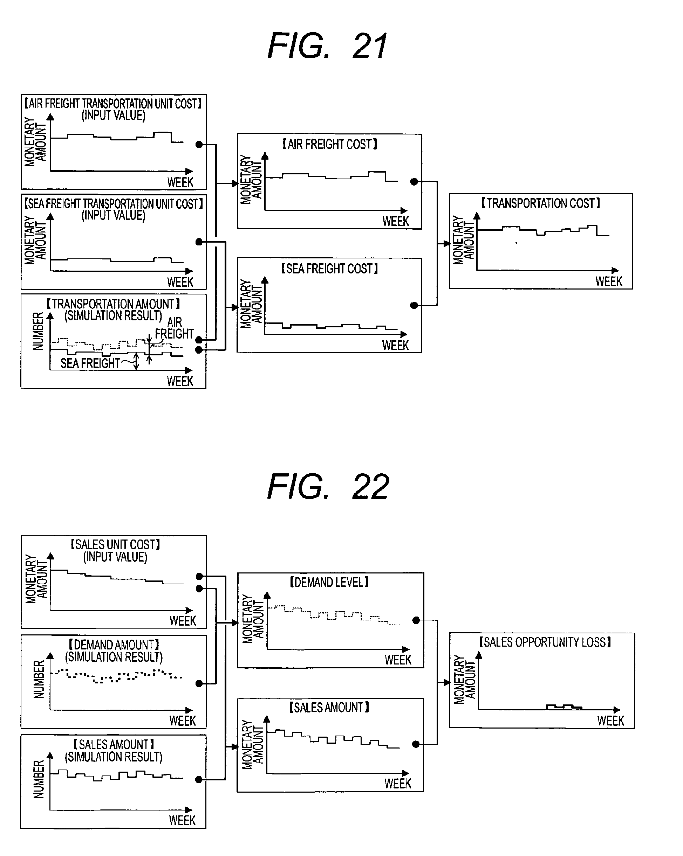

The aforementioned process is executed based on the base demand amount which is set upon determination with respect to the sea freight transportation amount. The proportion of the transportation amount of the sea freight to the air freight may be approximately determined depending on the base demand amount. It is ideal to determine the proportion based on evaluation of the cost such as transportation cost, stock cost, and sales opportunity loss. In the possible method, for example, the cost evaluation is made using the proportion of the base demand amount to the demand amount prediction value (base proportion) as the parameter so as to select the base proportion which reduces the cost. In order to enable the aforementioned cost evaluation, the cost calculation unit 107 of the transportation planning system 10 is allowed to calculate the transportation cost and the sales opportunity loss through execution of the process as shown in Figs. 21 and 22.

The transportation cost (Fig. 21) for each week may be obtained using the transportation unit costs stored in the storage device 101 (if they are different depending on the week, the value for each week may be used), and the transportation amounts via air freight and sea freight for the respective weeks calculated by the transportation amount calculation unit 103. The sales opportunity loss (Fig. 22) may be calculated using the sales unit costs stored in the storage device 101 (if they are different depending on the week, the value for each week may be used), the demand amount prediction value calculated by the demand value prediction value calculation unit 102 and the transportation amount calculation unit 103, and incoming amount to the supply destination via sea freight and air freight. Specifically, the latest value of the demand amount prediction value for each week is regarded as the demand amount, and the value of the thus regarded demand amount is multiplied by the sales unit cost to obtain the demand size. Meanwhile, the incoming amount to the supply destination via sea freight and air freight is assumed as the possible sales amount so that the sales amount may be set to any smaller one of the incoming amount and the demand amount. Then the obtained value is multiplied by the sales unit cost to provide the sales amount. In this way, the sales opportunity loss may be obtained by calculating the value corresponding to the sales amount which is below the demand size.

The stock cost may be calculated (multiplied) based on the stock evaluation unit cost (if they are different depending on the week, the value for each week may be used), a stock interest rate (if they are different depending on the week, the value for each week may be used) stored in the storage device 101, and the stock amount for each week obtained through calculation of the supply destination stock amount calculation unit 105 and the in-transportation stock amount calculation unit 106.

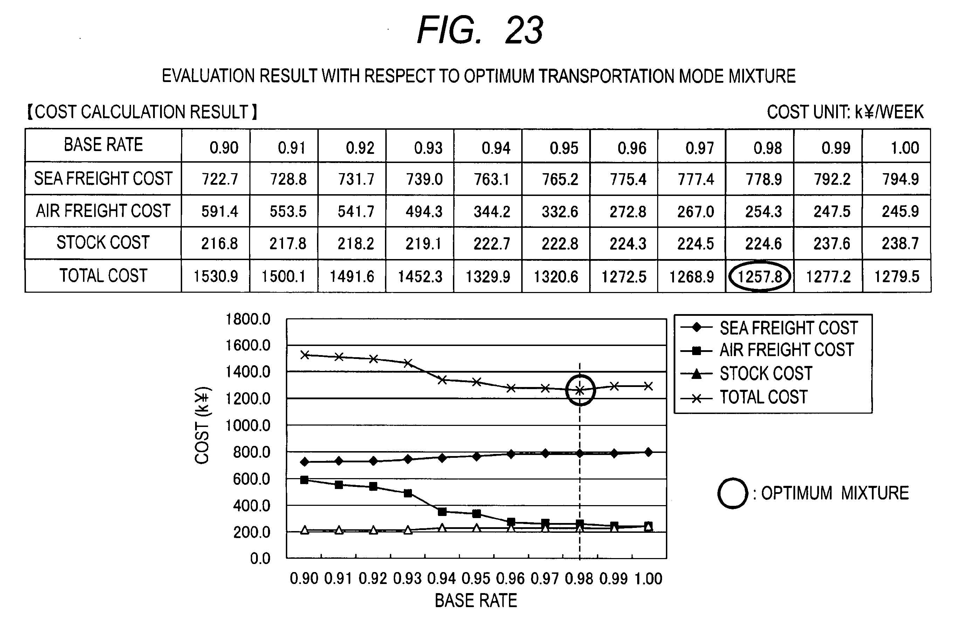

The respective costs for the respective weeks may be obtained through the cost calculation as described above, and accordingly, the total cost for a given period, or the average cost for each week may be calculated. The aforementioned costs may be calculated for the respective values of the base proportion as the parameter representing the proportion of the base demand amount to the demand amount prediction value. Then the thus obtained costs are compared to determine the optimum base proportion. The base proportion approximately corresponds to the proportion of the use of sea freight to air freight, thus leading to the optimum mixture of transportation modes. Fig. 23 represents an example of the display screen for evaluating the optimum mixture of the transportation modes. Referring to Fig. 23, the respective costs (average cost for each week) in accordance with the values of the base proportion using the table and the graph. The total cost is minimized when the base proportion is set to 0.98. In other words, it is optimally determined to use the value of 98% of the demand amount prediction value as the base demand amount for calculating the sea freight transportation amount. The display device of the transportation planning system 10 displays the screen as represented by Fig. 23 to allow the planner to evaluate the optimum transportation mode mixture.

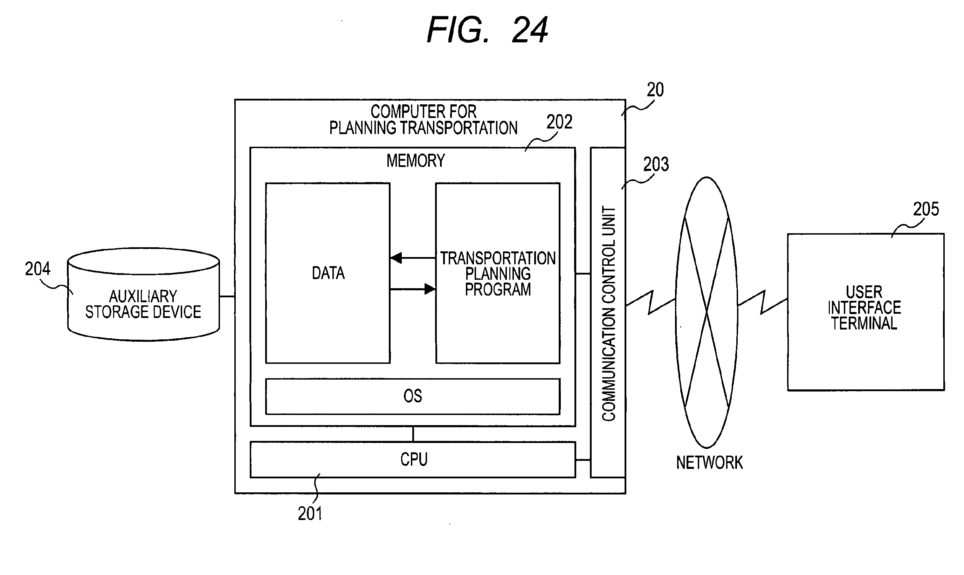

Fig. 24 represents an example of the hardware/software structure of the present transportation planning system.

A computer 20 for planning transportation which incorporates the transportation planning system 10 includes a CPU (Central Processing Unit) 201 which executes various types of computations and commands required for operating the system, a memory 202 which stores an OS (Operating System), an application program having operation contents of the transportation planning system written thereon such as the transportation planning program, and data required for the program, and a communication control unit 203 which controls connection and communication with outside via network as needed. An auxiliary storage device 204 is connected to the computer 20 for planning transportation such that the OS, program and data to be stored in the memory 202 are stored in the auxiliary storage device 204. The user interface which allows the user to operate the transportation planning system and to input/output the data may be incorporated within the computer 20 for planning transportation. A user interface terminal 205 may be disposed outside the computer 20 for planning transportation so as to be connected via the communication control unit 203 of the computer 20 for planning transportation and the network so as to allow the user physically apart from the computer 20 for planning transportation to be accessible and to communicate thereto.

In the aforementioned hardware/software structure, the respective components of the transportation planning system 10 shown in Fig. 1 correspond to those shown in Fig. 24 to be described below.

The storage device 101 is divided into the memory 202 and the auxiliary storage device 204. The memory 202 is mainly used for executing the respective process steps, and the auxiliary storage device 204 is used for storing large-sized data and fixedly storing a large amount of data.

The respective process steps of the demand amount prediction value calculation unit 102, the transportation amount calculation unit 103, the supply source shipment possible number calculation unit 104, the supply source stock amount calculation unit 105, the in-transportation stock amount calculation unit 106, and the cost calculation unit 107 will be executed through interaction among the OS, the transportation planning program, and the CPU (processor) 201 for controlling those programs, which are stored in the memory 202. Upon execution of the processing, various kinds of data stored in the memory 202 and the auxiliary storage device 204 is referred to and updated. The communication control unit 203 controls the communication of the demand amount prediction value calculation unit 102, the transportation amount calculation unit 103, the supply source shipment possible number calculation unit 104, the supply source stock amount calculation unit 105, the in-transportation stock amount calculation unit 106, and the cost calculation unit 107 with the user interface terminal 205 as needed.

The present transportation planning system may be provided in any one of the supply source and the supply destination, or another region. If the system is provided in the supply source, it may be structured to receive the demand amount prediction value required by the supply source via the network. If the system is provided in the supply destination, it may be structured to receive the supply source shipment possible number every other week via the network. The transportation plan made by the transportation planning system may be transmitted to the supply source via the network as the transportation instruction.

In the embodiment as described above, the sea freight and air freight are employed as the transportation modes. However, arbitrary transportation mode is applicable without being limited to the sea freight or air freight so long as the transportation mode with the long transportation time at low transportation cost and the transportation mode with the short transportation time at high transportation cost are employed. In the explanation of the embodiment, the week is used as the unit time for making the transportation plan in accordance with the transportation time for the air freight. However, arbitrary unit time which is shorter than the week may be employed. It is to be noted that the shorter unit time does not necessarily improve the accuracy. It is therefore preferable to make the transportation plan using the transportation time of the transportation mode requiring shorter transportation time as the unit time.

The transportation planning system is applicable to transportation of parts and products from a supply source to a supply destination, which allows the use of transportation modes each requiring different transportation time, for example, operations for planning transportation, instructing transportation, and selecting distributor of general manufacturing, distribution, and logistics industries.

### BRIEF DESCRIPTION OF THE DRAWINGS

Fig. 1 illustrates an example showing a structure of a transportation planning system.
Fig. 2 represents transportation time data.
Fig. 3 represents data of transportation unit costs.

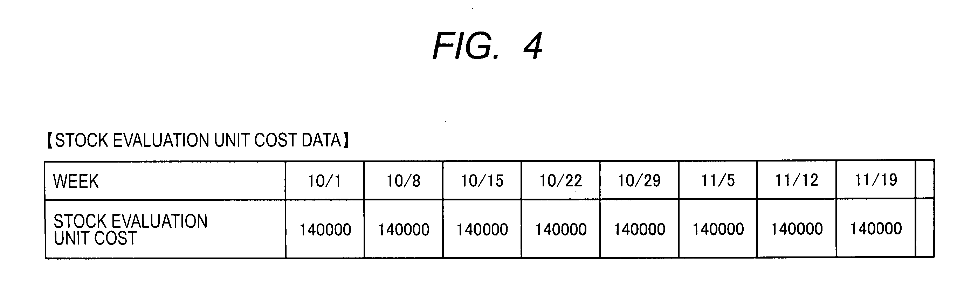

Fig. 4 represents data of stock evaluation unit costs.

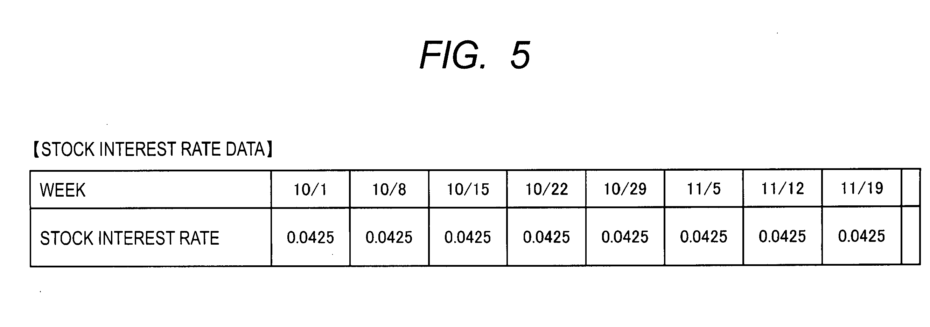

Fig. 5 represents data of stock interest rates.

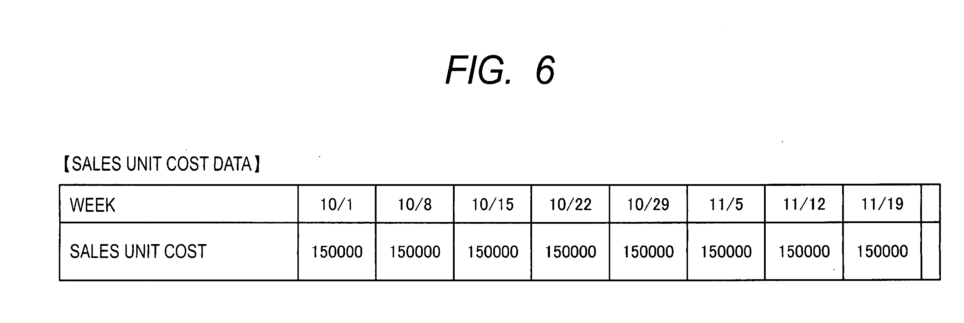

Fig. 6 represents data of sales unit costs.
Fig. 7 represents data of demand amount prediction values.

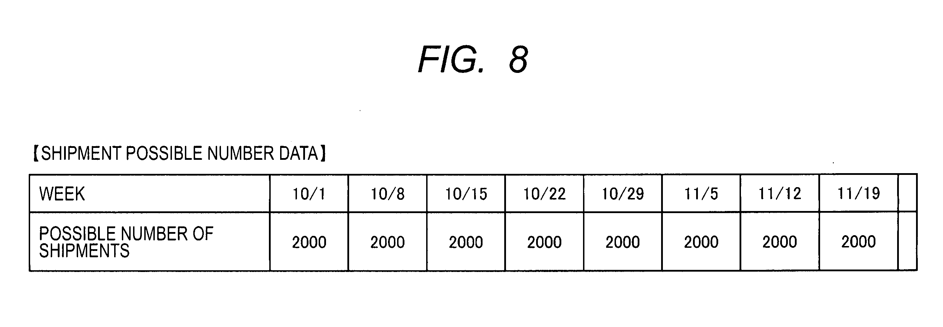

Fig. 8 represents data of possible numbers of shipments.

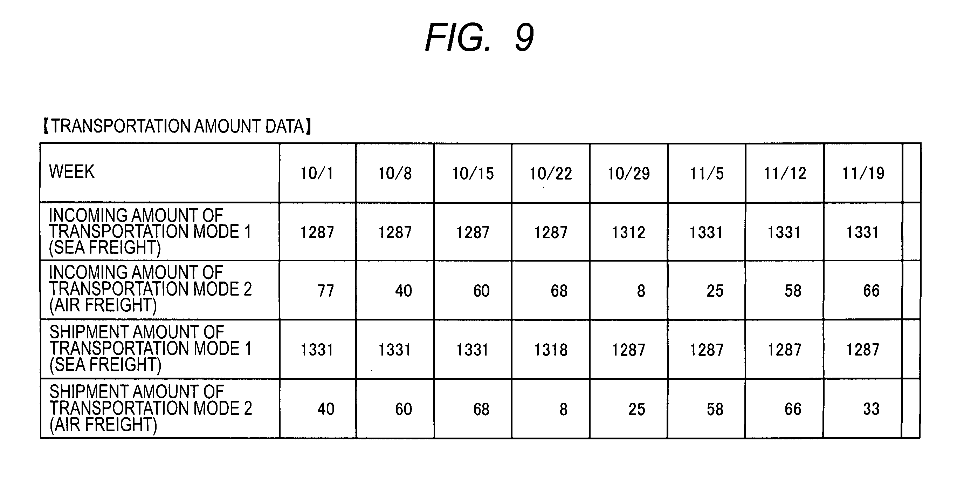

Fig. 9 represents data of transportation amounts.

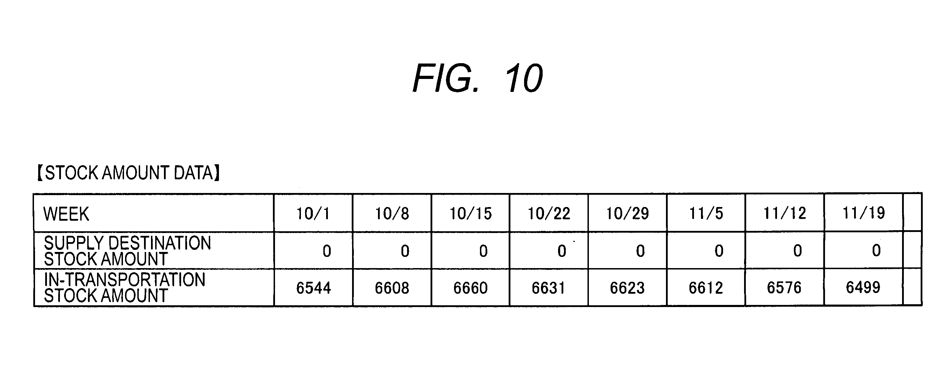

Fig. 10 represents data of stock amounts.
Fig. 11 is a flowchart of the process for determining the transportation amount.
Fig. 12 is a sequence chart of the process for determining the transportation amount.
Fig. 13 represents demand amount prediction values of the supply destination and possible numbers of shipments of the supply source.
Fig. 14 represents data of the latest demand amount prediction values.
Fig. 15 represents the transportation amount via air freight from the supply source.
Fig. 16 represents the transportation amount via sea freight from the supply source.
Fig. 17 represents the possible numbers of shipments.
Fig. 18 represents the stock amounts (scheduled amounts) of the supply destination.
Fig. 19 represents in-transportation stock amounts.
Fig. 20 represents an example of the transportation planning results.
Fig. 21 represents the procedure for obtaining the transportation cost.
Fig. 22 represents the procedure for obtaining the sales opportunity loss.
Fig. 23 represents an example of a display screen for examining the optimum mixture of the transportation modes.
Fig. 24 represents an example showing the structure of hardware/software of the transportation planning system. Explanation of codes

10: transportation planning system, 101: storage device,
102: demand amount prediction value calculation unit,
103: transportation amount calculation unit, 104: supply source shipment possible number calculation unit,
105: supply destination stock amount calculation unit,
106: in-transportation stock amount calculation unit,
107: cost calculation unit, 20: computer for planning transportation, 201: CPU (Central Processing Unit),
202: memory, 203: communication control unit,
204: auxiliary storage device, 205: user interface terminal

## Claims

1. A transportation planning system comprising:
a storage device for storing a demand amount prediction value and a stock plan amount of goods in a supply destination, and a transportation time of the goods from a supply source to the supply destination in accordance with each of plural transportation modes with different transportation times, one of the plural transportation modes being set to a first transportation mode, and another being set to a second transportation mode with a transportation time longer than that of the first transportation mode;
a first transportation amount determination unit which determines an amount obtained by subtracting the stock plan amount at a first future time point and an amount of the goods which arrives at the supply destination via the second transportation mode from the demand amount prediction value at the first future time point after an elapse of the time for transporting the goods via the first transportation mode from a present time from the supply source to the supply destination as a first transportation amount via the first transportation mode; and
a second transportation amount determination unit which determines a base demand amount corresponding to a part of the demand amount prediction value at a second future time point after an elapse of the transportation time via the second transportation mode from the present time subsequent to the determination of the first transportation amount made by the first transportation amount determination unit as a second transportation amount via the second transportation mode.

2. The transportation planning system according to claim 1, wherein the storage device stores a possible number of shipments of the goods in the supply source to set a sum of the first and the second transportation amounts so as not to exceed the possible number of shipments.

3. The transportation planning system according to claim 2, further comprising a supply source shipment possible number calculation unit which adds a difference between the possible number of shipments and the sum of the first and the second transportation amounts to the possible number of shipments at a time point for making a next transportation plan when the possible number of shipments is larger than the sum of the first and the second transportation amounts.

4. The transportation planning system according to claim 3, further comprising a supply source stock amount calculation unit which subtracts the demand amount prediction value from a first time point to a second time point from a sum of a stock amount at the first time point in the supply destination and an incoming plan amount of the goods which arrives at the supply destination via the first and the second transportation modes from the first time point to the second time point, and stores a subtraction result in the storage device as a stock amount of the supply destination at the second time point.

5. The transportation planning system according to claim 4, further comprising an in-transportation stock amount calculation unit which sets an amount of the goods during transportation via the first and the second transportation modes at the second time point as an in-transportation stock amount so as to be stored in the storage device.

6. The transportation planning system according to claim 5, wherein the storage device further stores a transportation unit cost required for transporting the goods from the supply source to the supply destination in accordance with each of the plural transportation modes, a sales unit cost of the goods, a stock evaluation unit cost and a stock interest rate of the goods, the transportation planning system further comprising a cost calculation unit which multiplies an incoming plan amount of the goods which arrives at the supply destination via the first and the second transportation modes from the first time point to the second time point by the transportation unit cost for each of the transportation modes to obtain a sum of multiplied values for the respective transportation modes, obtains a value derived from multiplying a difference between the demand amount prediction value and the incoming plan amount of the goods which arrives at the supply destination via the first and the second transportation modes from the first time point to the second time point by the sales unit cost as a sales opportunity loss when the demand amount prediction value is larger than the incoming plan amount of the goods, and obtains a value derived from multiplying a sum of the in-transportation stock amount and the stock amount of the supply destination by the stock evaluation unit cost and the stock interest rate as a stock cost.

7. The transportation planning system according to claim 6, wherein a proportion of the base demand amount to the demand amount prediction value is determined based on a total cost of the transportation cost, the sales opportunity loss and the stock cost.

8. The transportation planning system according to claim 7, wherein the transportation cost includes an environment load cost to each of the first and the second transportation modes.

9. The transportation planning system according to claim 5, wherein a time length from the first time point to the second time point corresponds to a transportation time taken for transporting the goods from the supply source to the supply destination via the first transportation mode.

10. A transportation planning method comprising the steps of:
using a demand amount prediction value and a stock plan amount of goods in a supply destination, and a transportation time of the goods from the supply source to the supply destination in accordance with each of plural transportation modes with different transportation times, which are stored in a storage device, one of the plural transportation modes being set to a first transportation mode, and the other being set to a second transportation mode with the transportation time longer than that of the first transportation mode, the method comprising the steps of:
determining an amount obtained by subtracting the stock plan amount at a first future time point and an amount of the goods which arrives at the supply destination via the second transportation mode from the demand amount prediction value at the first future time point after an elapse of the time for transporting the goods via the first transportation mode from a present time from the supply source to the supply destination as a first transportation amount via the first transportation mode; and
determining a base demand amount corresponding to a part of the demand amount prediction value at a second future time point after an elapse of the transportation time via the second transportation mode from the present time subsequent to the determination of the first transportation amount as a second transportation amount via the second transportation mode.

11. The transportation planning method according to claim 10, wherein a sum of the first and the second transportation amounts is determined so as not to exceed a possible number of shipments of the goods in the supply source, which is stored in the storage device.

12. The transportation planning method according to claim 11, wherein when the possible number of shipments is larger than the sum of the first and the second transportation amounts, a difference between the possible number of shipments and the sum of the first and the second transportation amounts is added to the possible number of shipments at a time point for making a next transportation plan.

13. The transportation planning method according to claim 12, wherein the demand amount prediction value from a first time point to a second time point is subtracted from a sum of a stock amount at the first time point in the supply destination and an incoming plan amount of the goods which arrives at the supply destination via the first and the second transportation modes from the first time point to the second time point, and stores a subtraction result in the storage device as a stock amount of the supply destination at the second time point.

14. The transportation planning method according to claim 13, wherein an amount of the goods during transportation via the first and the second transportation modes at the second time point is stored in the storage device as an in-transportation stock amount.

15. The transportation planning method according to claim 14,
wherein a transportation cost is calculated by summing each of values obtained by multiplying the incoming plan amount of the goods which arrives at the supply destination via the first and the second transportation modes from the first time point to the second time point by each transportation unit cost for each of the transportation modes using the transportation unit cost as the cost required for transporting the goods from the supply source to the supply destination in accordance with each of the plural transportation modes, a sales unit cost of the goods, a stock evaluation unit cost of the goods and a stock interest rate which are stored in the storage device;
when the demand amount prediction value is larger than the incoming plan amount of the goods which arrives at the supply destination via the first and the second transportation modes from the first time point to the second time point, a difference between the incoming plan amount and the demand amount prediction value is multiplied by the sales unit cost to obtain a sales opportunity loss; and
a stock cost is obtained by multiplying a sum of the in-transportation stock amount and the stock amount of the supply destination by the stock evaluation unit cost and the stock interest rate.

16. The transportation planning method according to claim 14, wherein a proportion of the base demand amount to the demand amount prediction value is determined based on a total cost of the transportation cost, the sales opportunity loss, and the stock cost.

17. The transportation planning method according to claim 16, wherein the transportation cost includes an environmental load cost to each of the first and the second transportation modes.

18. The transportation planning method according to claim 14, wherein a time length from the first time point to the second time point corresponds to a transportation time taken for transporting the goods from the supply source to the supply destination via the first transportation mode.

19. A transportation planning system comprising:
a storage device for storing a demand amount prediction value and a stock plan amount of goods in a supply destination, and a transportation time of the goods from a supply source to the supply destination in accordance with each of plural transportation modes with different transportation times, one of the plural transportation modes being set to a first transportation mode, and another being set to a second transportation mode with a transportation time longer than that of the first transportation mode;
a processor which determines an amount obtained by subtracting the stock plan amount at a first future time point and an amount of the goods which arrives at the supply destination via the second transportation mode from the demand amount prediction value at the first future time point after an elapse of the transportation time of the goods via the first transportation mode from a present time from the supply source to the supply destination as a first transportation amount via the first transportation mode, and a base demand amount corresponding to a part of the demand amount prediction value at a second future time point after an elapse of the transportation time via the second transportation mode from the present time subsequent to the determination of the first transportation amount as a second transportation amount via the second transportation mode; and
a communication control unit connected to the supply destination and the supply source via a network, which receives the demand amount prediction value of the goods in the supply destination from the supply destination via the network, and transmits the determined first and the second transportation amounts to the supply source as a transportation instruction via the network.

20. The transportation planning system according to claim 19, wherein the first transportation mode is air freight, and the second transportation mode is sea freight.
